# EUROPÄISCHE PATENTSCHRIFT

(11) **EP 1 566 211 B1**
(45) Veröffentlichungstag und Bekanntmachung des Hinweises auf die Patenterteilung: **27.09.2006**
(21) Anmeldenummer: 05101279.7
(22) Anmeldetag: 21.02.2005
(51) Int. Cl.: B01F 1/00

(54) **Statischer Mischer und seine Verwendung**
Static mixer and use thereof
Mélangeur statique et utilisation

(30) Priorität: 23.02.2004 DE 102004008755
(43) Veröffentlichungstag der Anmeldung: 24.08.2005
(73) Patentinhaber: HILTI Aktiengesellschaft, 9494 Schaan (LI)
(72) Erfinder: Schulz-Hanke, Wolfgang, 86836 Untermeitingen (DE); Jakobströer, Petra, 86899 Landsberg (DE)
(74) Vertreter: Wildi, Roland

(56) Entgegenhaltungen:
- US-A- 4 293 425
- US-A- 4 871 373
- US-A- 5 904 851
- US-B1- 6 364 218
- US-E- R E36 235

## Beschreibung

Gegenstand der vorliegenden Erfindung sind ein statischer Mischer zum Vermischen der Komponenten von flüssigen, reaktiven Mehrkomponenten-Zusammensetzungen, mit einem mindestens einen Mischabschnitt definierenden Mantelrohr, mit Eintrittsöffnung und Austrittsöffnung für das Mischgut, und mindestens einem in dem Mischabschnitt angeordneten, in seinen Außenabmessungen an die Innenabmessungen des Mantelrohrs angepaßten Mischelement, sowie die Verwendung dieses statischen Mischers zur Einführung von die physikalischen und/oder chemischen Eigenschaften des aus der flüssigen, reaktiven Mehrkomponenten-Zusammensetzung gebildeten flüssigen Mischguts beeinflussenden Zusatzstoffen.

Flüssige, reaktive Mehrkomponenten-Zusammensetzungen werden in vielfältiger Weise eingesetzt, beispielsweise als Zweikomponenten-Klebstoffe, Zweikomponenten-Mörtelmassen zur Befestigung von Bauteilen, Ankerstangen und dergleichen in festen Untergründen, wie Mauerwerk, Beton oder sonstigen harten Unterlagen oder zur Bildung von Brandschutzschäumen oder Konstruktionsschäumen, die zum Ausfüllen von Durchbrüchen, Durchführungen und Öffnungen in Wänden, Decken und Böden von Gebäuden oder aber auch zum Einbau von Fenstern und Türen in Gebäuden. Solche Mehrkomponenten-Zusammensetzungen, namentlich solche, die für diese Zwecke auf Baustellen vor Ort eingesetzt werden, liegen normalerweise in Mehrkammer-Behältern oder -Beuteln vor, in denen die miteinander reagierenden Komponenten reaktionsinhibierend voneinander getrennt gelagert sind. Bei der bestimmungsgemäßen Anwendung werden die verschiedenen Komponenten aus den getrennten Behältern ausgebracht, beispielsweise durch Auspressen mit Hilfe eines Auspreßgerätes, und dann vermischt, wonach dann das erhaltene Mischgut auf den Anwendungsbereich aufgebracht, beispielsweise in ein Dübelloch eingeführt wird.

Anschließend werden die zu befestigenden Bauteile aufgebracht, beispielsweise die Ankerstange, in das mit dem Mischgut beschickte Dübelloch eingebracht, in dem die Aushärtung der Zusammensetzung erfolgt, die bereits nach dem Vermischen der Komponenten des Mischguts einsetzt.

Im Bereich der thermischen Isolierung von Gebäuden werden weiterhin Dosiermaschinen verwendet, um großflächig Isolierschäume auf Wände und Decken aufzusprühen. Hierzu werden im vorderen Bereich der Sprühpistolen Aufsätze aufgebracht, mit denen die einzelnen Komponenten der Mehrkomponenten-Isolierschaumzusammensetzungen vermischt werden.

Für das Vermischen der verschiedenen Komponenten der Zusammensetzungen werden üblicherweise statische Mischer oder Statikmischer eingesetzt, die in einem Mantelrohr ein Mischelement enthalten, welches ein homogenes Vermischen der Bestandteile des Mischgutes unter Nutzung der Strömungsenergie der unter Druck in den statischen Mischer eingebrachten Komponenten der Mehrkomponenten-Zusammensetzungen bewirkt. Es handelt sich dabei um Mischeinrichtungen, die weder einen bewegten Behälter noch bewegte Mischwerkzeuge aufweisen, bei denen das Durchmischen des Mischgutes lediglich unter der Einwirkung der Bewegungsenergie des Mischgutes erfolgt, welches kontinuierlich durch den statischen Mischer geführt wird und aufgrund der in dem Strömungsverlauf vorliegenden Mischelemente eine intensive Durchmischung des Mischgutes bewirkt. Solche Mischelemente sind Krümmer, Erweiterungen, Injektoren, Gegenstromstrahlen, Drallapparate, Leitbleche oder Einbauten verschiedenster Art, die durch ihre geometrische Ausbildung zu einer intensiven Quervermischung des Mischgutes führen.

Sowohl das Mantelrohr als auch die Mischelemente solcher statischer Mischer können aus den unterschiedlichsten Materialien bestehen, beispielsweise aus Metall, Glas und insbesondere Kunststoff, wobei insbesondere die für das Vermischen und Ausbringen von Mehrkomponenten-Zusammensetzungen in Form von Mörtelmassen, Bauschäumen etc. eingesetzten statischen Mischer aus Kunststoff bestehen, mit herausnehmbaren Mischelementen unterschiedlichster Ausgestaltung.

Die für das Durchmischen von Mehrkomponenten-Zusammensetzungen, die als Mörtelmassen, Bauschäume, Brandschutzschäume etc. vor Ort auf der Baustelle eingesetzten Mischer liegen im allgemeinen in Form von einmal benutzten, wegwerfbaren Kunststoffstatikmischern vor, in Form eines Mantelrohrs und darin vorliegenden Mischelementen, die auf die Austrittsöffnung des Auspreßgerätes aufgesetzt und dort fixiert werden. Aus dem Auspreßgerät werden die in getrennten Behältern vorliegenden Bestandteile der Mehrkomponenten-Zusammensetzung unter Druckeinwirkung, sei es durch mechanischen Auspreßdruck oder unter Einsatz eines Druckfluids oder eines Treibmittels, aus den getrennten Vorratsbehältern ausgepresst und durch den aufgesetzten statischen Mischer hindurchgeführt.

Bei der Anwendung solcher Mehrkomponenten-Zusammensetzungen auf der Baustelle, beispielsweise an Wänden und Decken, besteht nun häufig das Problem, daß das aus dem Mundstück des statischen Mischers austretende Mischgut, in dem die Aushärtungs- und/oder Aufschäumreaktionen ablaufen, nach dem Aufbringen auf den Bestimmungsort, beispielsweise an der Decke oder an senkrechten Wänden, noch keine ausreichende Viskosität aufweist und aus den zu verschließenden Öffnungen heraus- und an den Wänden herunterfließt. Gewöhnlich wird daher üblicherweise eine Schalung aus Pappkarton verwendet, die mit Klebeband an der Unterseite der Decke oder der Wand befestigt wird, um dieses Ausfließen der ausreagierenden Zusammensetzung zu verhindern. Im Bereich von Öffnungen in Trockenbauwänden werden auch Schalungen aus feinem Drahtgeflecht oder Streckmetall eingesetzt, die für die jeweilige Öffnung passend zurechtgebogen werden. Es ist ersichtlich, daß das Anbringen einer Schalung zur Verhinderung des Abfließens der reagierenden Mehrkomponenten-Zusammensetzung einen zusätzlichen Arbeitsschritt und damit höhere Kosten mit sich bringt.

Weiterhin ist es bekannt, daß solche Mörtelmassen und insbesondere Schäume durch chemische oder physikalische Thixotropiermittel so modifiziert werden können, daß sie auch in nicht vollständig ausreagiertem Zustand eine ausreichende "Standfestigkeit" aufweisen. Durch die Anwendung von solchen thixotropierenden Mittel lassen sich zwar füllstoffreie Isolierschäume niedriger Dichte standfest einstellen. Bei hochgefüllten Brandschutzschäumen mit hoher Dichte führt die Viskositätserhöhung durch die Thixotropiermittel zu Problemen beim Auspressen der Komponenten durch den erhöhten Fließwiderstand.

Es hat sich weiterhin gezeigt, daß man die Standfestigkeit von Zweikomponenten-Poyurethan-Schäumen, die als solche Bauschäume eingesetzt werden können, dadurch erhöhen kann, daß man zusätzlich Acrylat in das Mischgut einbringt. Diese Viskositätserhöhung wird erreicht durch einen der Polyurethan-Bildungsreaktionen vorgelagerten physikalischen Effekt, nämlich des Brechens der Acrylatdispersion in dem Mischgut durch den Polaritätsunterschied des Isocyanats zu der ersten Komponente. Dies führt zu einer Vergelung und damit zu einer Erhöhung der Viskosität des Mischgutes.

Der Vorteil eines solchen Brechens der Acrylatdispersion ist der, daß das Mischgut beim Eintritt in den statischen Mischer eine geringe Viskosität aufweist, welche dann beim Hindurchtreten durch den statischen Mischer langsam ansteigt, was zur Folge hat, daß der Anwender nur geringe Kräfte aufbieten muß, um das Mischgut aus dem statischen Mischer auszupressen. Wenn der Schaum aus dem statischen Mischer austritt, besitzt er eine ausreichend hohe Klebrigkeit, um an der Wand anzuhaften, weist jedoch eine Viskosität auf, die ein Herausfließen des Mischgutes aus den Öffnungen beziehungsweise ein Herunterfließen an der Wand zu verhindert.

Der Nachteil des oben angesprochenen Effektes des Brechens der Acrylatdispersion in einer Zweikomponenten-Polyurethan/Acrylat-Schaumzusammensetzung ist die Temperaturabhängigkeit der nachgelagerten Polyurethanreaktion. Bei hohen Anwendungstemperaturen oberhalb 25°C, die man beispielsweise im Sommer auf der Baustelle antrifft, besteht die Gefahr, daß die Polyurethanbildungsreaktion schneller abläuft als das Brechen der Acrylatdispersion unter Erhöhung der Viskosität, so daß der angestrebte Effekt des Verhinderns des Herabfließens des Mischgutes nicht erreicht wird. Dies hat zur Folge, daß der erwünschte physikalische Dispersionsbruch unterdrückt wird und daß die angestrebten physikalischen Eigenschaften des ausgehärteten Schaumes nicht erreicht werden, beispielsweise durch eine geringe Dichte des ausgehärteten Materials. Zwar ist es möglich, die Geschwindigkeit des Dispersionsbruches durch geeignete Zusätze in der Polyolkomponente und in der Polyisocyanatkomponente und durch die Mischgüte des statischen Mischers zu variieren. Allerdings sind der Geschwindigkeitserhöhung des Brechens der Dispersion aber Grenzen gesetzt durch die physikalische Länge des Mischers. Für den Fall, daß das Brechen der Dispersion zu schnell stattfindet, ergibt sich ein Ausfällen der Dispersion in dem statischen Mischer, was zur Folge hat, daß der Anwender zu hohe Kräfte aufbringen muß, um das Mischgut aus dem statischen Mischer auszubringen.

Die der vorliegenden Erfindung zugrundeliegende Aufgabe besteht nun darin, einen statischen Mischer bereitzustellen, mit dem es gelingt, dem aus der flüssigen, reaktiven Mehrkomponenten-Zusammensetzung gebildeten flüssigen Mischgut Zusatzstoffe zuzuführen, mit denen die physikalischen und/oder chemischen Eigenschaften dieses Mischguts gezielt beeinflußt werden können in der Weise, daß die angestrebten Eigenschaften erst nach dem Austritt aus dem Mischer erreicht werden und dadurch ein leichtes Auspressen des Mischgutes aus dem statischen Mischer möglich wird.

Gleichzeitig soll durch ein gutes Durchmischen der Zusatzstoffe mit dem Mischgut eine schnelle Beeinflussung der physikalischen und/oder chemischen Eigenschaften des Mischgutes erreicht werden, so daß das Mischgut unmittelbar nach dem Ausbringen des Mischgutes aus der Austrittsöffnung des statischen Mischers die angestrebten physikalischen und/oder chemischen Eigenschaften aufweist. Hierdurch soll erreicht werden, daß beispielsweise ein ausgebrachter Bauschaum eine hohe Klebrigkeit aufweist und damit gut an dem bestimmungsgemäßen Ort anhaftet und eine ausreichend hohe Standfestigkeit aufweist, so daß ein schalungsfreies Auftragen des Schaumes auf der Wand und an der Decke möglich wird. Gleichzeit soll es möglich sein, die zuzuführenden Zuschlagstoffe ohne weiteres vor Ort in Abhängigkeit von den einzuhaltenden Umgebungsbedingungen beziehungsweise den anzustrebenden Eigenschaften des Mischgutes auszuwählen und in den erforderlichen Mengen in das Mischgut einzubringen.

Es hat sich gezeigt, daß diese Aufgabe dadurch gelöst werden kann, daß man die in das Mischgut einzubringenden Zusatzstoffe vorzugsweise in fester Form in eine in dem Mantelrohr vorgesehene Kammer des statischen Mischers einbringt, die sich vorzugsweise im Bereich in der Nähe der Austrittsöffnung findet. Bei der erfindungsgemäßen Benutzung strömt das durch den statischen Mischer hindurchgeförderte und durchmischte Mischgut an diesen Zusatzstoffen vorbei und nimmt diese unter gleichzeitiger Durchmischung auf, wodurch eine gute Durchmischung der Zusatzstoffe mit dem Mischgut unmittelbar vor der Austrittsöffnung des statischen Mischers erreicht und damit die angestrebten Eigenschaften des aus dem statischen Mischer austretenden Mischgutes erzielt werden.

Gegenstand der Erfindung ist daher der statische Mischer gemäß Hauptanspruch. Die Unteransprüche betreffen bevorzugte Ausführungsformen dieses Erfindungsgegenstandes sowie die Verwendung dieses statischen Mischers zur Einführung von physikalischen und/oder chemischen Eigenschaften des Mischgutes beeinflussenden Zusatzstoffen in dieses Mischgut.

Die Erfindung betrifft insbesondere einen statischen Mischer zum Vermischen der Komponenten von flüssigen, reaktiven Mehrkomponenten-Zusammensetzungen, mit einem mindestens einen Mischabschnitt definierenden Mantelrohr, mit Eintrittsöffnung und Austrittsöffnung für das Mischgut, und mindestens einem in dem Mischabschnitt angeordneten, in seinen Außenabmessungen an die Innenabmessungen des Mantelrohrs angepaßten Mischelement, welcher gekennzeichnet ist durch mindestens eine zwischen der Eintrittsöffnung und der Ausgangsöffnung in dem Mantelrohr vorgesehene Kammer zur Aufnahme von in das Mischgut einzubringenden Zusatzstoffen.

Bei diesen Zusatzstoffen handelt es sich beispielsweise um an sich bekannte Produkte, welche die Viskosität des durch den statischen Mischer strömenden Mischgutes erhöhen und eine Gelbildung verursachen. Beispielsweise kommen als solche Dispersionen brechende Mittel Salze oder den pH-Wert erhöhende chemische Stoffe in Frage, die sich relativ leicht in dem Mischgut lösen oder dispergieren. Als Zusatzstoffe können auch Polymerisationsbeschleuniger, Thixotropiermittel, Ausfällungsmittel, verflüssigende Mittel und dergleichen eingesetzt werden. Weiterhin ist es möglich, als Zusatzstoffe dieser Art Katalysatoren für die in dem Mischgut ablaufenden Reaktionen zu verwenden.

Das Ausmaß der Veränderung der physikalischen und/oder chemischen Eigenschaften beziehungsweise der Reaktionsbedingungen des reagierenden Mischgutes wird durch die Art, die Menge und die Teilchengröße der vorzugsweise festen Zusatzstoffe gesteuert, die in der in dem Mantelrohr vorgesehenen Kammer vorliegen und die sich im Zuge des Hindurchführens des Mischgutes in diesem lösen oder dispergieren, während die nicht gelösten oder nicht dispergierten Zusatzstoffe in der Kammer zurückgehalten werden.

Da es mit Hilfe des erfindungsgemäßen statischen Mischers möglich ist, die in das Mischgut einzubringenden Zusatzstoffe an beliebigen Stellen des statischen Mischers einzubringen, wird es möglich, die angestrebte Veränderung der physikalischen und/oder chemischen Eigenschaften des Mischgutes in der Weise zu steuern, daß das Mischgut nach dem Austreten aus der Austrittsöffnung des statischen Mischers die angestrebten Eigenschaften aufweist.

Die Erfindung sei im folgenden näher unter Bezugnahme auf die beigefügten Zeichnungen erläutert.

In den Zeichnungen zeigen:
- **Figur 1:**: Eine schematische Darstellung des erfindungsgemäßen statischen Mischers;
- **Figur 2:**: eine perspektivische Darstellung einer ersten bevorzugten Ausführungsform des erfindungsgemäßen statischen Mischers in zusammengefügtem Zustand, wobei in dem die innerhalb des Mantelrohrs liegenden Mischelemente und die Bestandteile der Kammer gestrichelt wiedergegeben sind;
- **Figur 3:**: eine perspektivische Darstellung des Mantelrohrs dieser Ausführungsform des erfindungsgemäßen statischen Mischers;
- **Figur 4:**: eine perspektivische Darstellung des Mischelements dieser Ausführungsform des statischen Mischers;
- **Figur 5:**: eine perspektivische Darstellung eines in die Kammer einzubringenden Behälters zur Aufnahme der in das Mischgut einzubringenden Zusatzstoffe;
- **Figur 6:**: eine perspektivische Darstellung der zusammengefügten Kombination aus dem Mischelement und diesem Behälter zur Aufnahme der Zusatzstoffe;
- **Figur 7:**: eine perspektivische Darstellung einer weiteren bevorzugten Ausführungsform des erfindungsgemäßen statischen Mischers in zusammengebautem Zustand, wobei die innenliegenden Mischelemente und die Zusatzstoffe gestrichelt wiedergegeben sind;
- **Figur 8:**: eine perspektivische Teildarstellung dieser Ausführungsform des erfindungsgemäßen statischen Mischers ohne die abgenommene Kammer zur Aufnahme der in das Mischgut einzubringenden Zusatzstoffe; und
- **Figur 9:**: eine perspektivische Darstellung dieser abgenommenen Kammer zur Aufnahme der Zusatzstoffe.

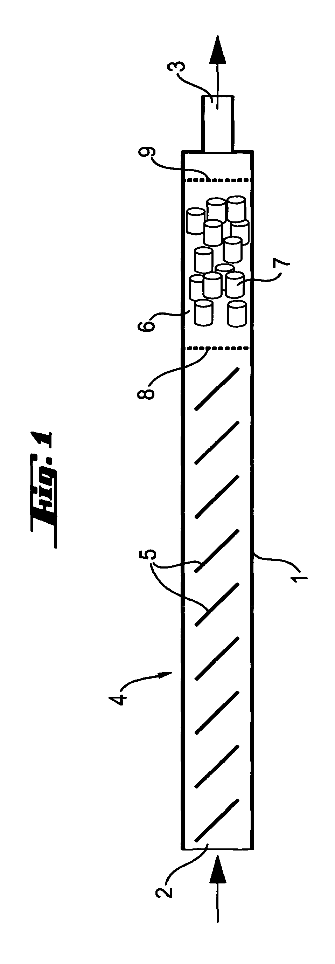

Wie aus der Figur 1 hervorgeht, umfaßt der erfindungsgemäße statische Mischer ein Mantelrohr 1 mit einer Eintrittsöffnung 2, durch welche die Bestandteile der Mehrkomponenten-Zusammensetzungen in den statischen Mischer eingeführt und dort durchmischt werden, und einer Austrittsöffnung 3 für das Mischgut. In dem Mantelrohr 1 ist mindestens ein Mischabschnitt 4 vorgesehen in dem ein oder mehrere Mischelemente 5 vorgesehen sind, die in ihren Außenabmessungen an die Innenabmessungen des Mantelrohrs angepaßt sind. Zwischen der Eintrittsöffnung 2 und der Austrittsöffnung 3 ist mindestens eine Kammer 6 in dem Mantelrohr vorgesehen, in der die in das Mischgut einzubringenden Zusatzstoffe angeordnet werden.

Die Kammer 6 kann in Förderrichtung vor oder nach dem Mischabschnitt 4 oder zwischen zwei Mischabschnitten 4 angeordnet sein.

Das Mantelrohr 1 kann einen kreisförmigen, ovalen und/oder eckigen, vorzugsweise kreisförmigen und/oder quadratischen Innenquerschnitt aufweisen, wobei der Außenquerschnitt beliebig ausgebildet sein kann. Weiterhin kann der durch das Mantelrohr 1 definierte Innenraum zylindrisch geformt sein, das heißt die Querschnittsfläche ist in allen Bereichen die gleiche. Anderseits ist es auch möglich, daß die Querschnittsfläche des Mantelrohres von der Eintrittsöffnung zur Austrittsöffnung zunimmt oder abnimmt, vorzugsweise nimmt sie jedoch ab, das heißt das Mantelrohr 1 verengt sich von der Eintrittsöffnung 2 zur Austrittsöffnung 3.

Gemäß einer bevorzugten Ausführungsform kann die mindestens eine Kammer 6 zur Aufnahme der in das Mischgut einzubringenden Zusatzstoffe 7 an ihrem Einlaufende beziehungsweise ihrem Auslaufende durch mindestens eine in ihren Außenabmessungen an die Innenabmessungen des Mantelrohrs 1 angepaßte Abgrenzung aufweisen. Diese Abgrenzung soll für das Mischgut durchlässig sein, jedoch die in das Mischgut einzubringenden aber noch nicht gelösten oder nicht in dem Mischgut dispergierten Zusatzstoffe 7 zurückhalten. Gemäß einer bevorzugten Ausführungsform wird die mindestens eine Kammer 6 durch zwei Abgrenzungen 8 und 9 begrenzt. Diese Abgrenzungen 8 beziehungsweise 9 können in Form eines Siebes, einer Lochplatte, einer Sinterplatte und/oder eines Vlies- oder Filtermaterials, beispielsweise in Form eines Filterbeutels, vorliegen, wobei diese Abgrenzungen aus beliebigen Materialien gefertigt sein können, beispielsweise aus Papier, Metall, Glas und/oder Kunststoff.

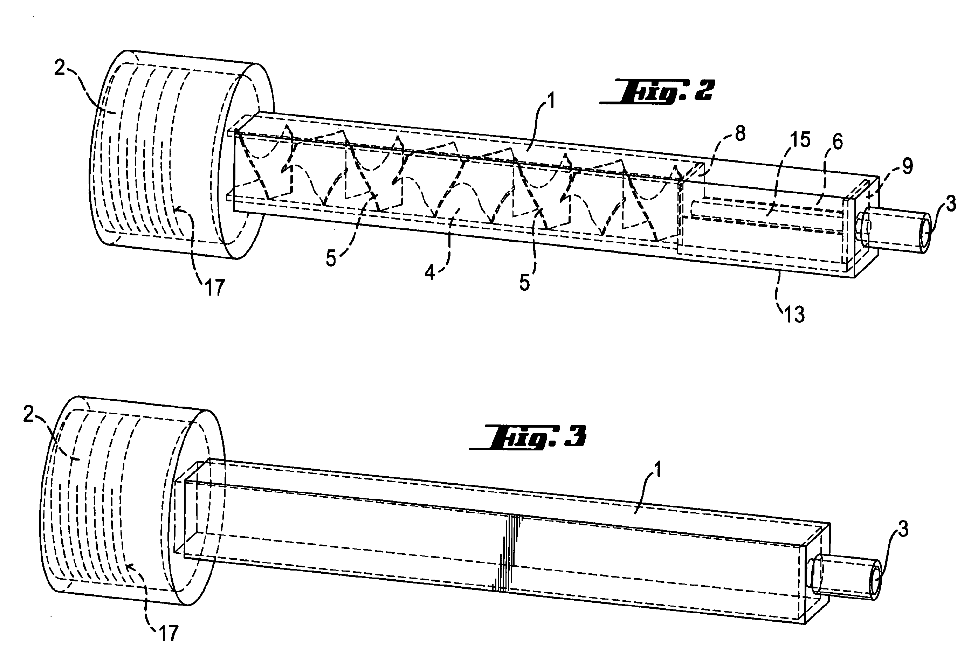

Die in den Figuren 2 bis 6 dargestellte Ausführungsform des erfindungsgemäßen statischen Mischers weist ein quadratisches Mantelrohr 1 mit quadratischem Innen- und Außenquerschnitt auf. Das Mantelrohr weist eine Eintrittsöffnung 2 und eine Austrittsöffnung 3 auf, wobei an der Eintrittsöffnung 2 des Mantelrohrs eine Steckverbindung, Schraubverbindung, Klemmverbindung und/oder Bayonettverbindung, vorzugsweise ein Gewinde, vorgesehen ist, zur lösbaren Befestigung des Mantelrohrs an der Austrittsöffnung eines die Komponenten der flüssigen, reaktiven Mehrkomponenten-Zusammensetzung in getrennten Vorratsbehältern enthaltenden, in der Zeichnung nicht dargestellten Auspreßgeräts. Dabei kann die Steckverbindung, Schraubverbindung, Klemmverbindung und/oder Bayonettverbindung oder auch das Gewinde 17 mit einer geeigneten Dichtung versehen sein, die das Austreten des Mischguts an der Verbindungsstelle verhindert.

Die Figur 2 zeigt dabei das in dem Mischabschnitt des Mantelrohrs angeordnete Mischelement 5 in gestrichelter Darstellung sowie einen in der Kammer 6 vorliegenden Behälter 13 zur Aufnahme der in das Mischgut einzubringenden Zusatzstoffe 7, wobei dieser Behälter ebenfalls gestrichelt wiedergegeben ist.

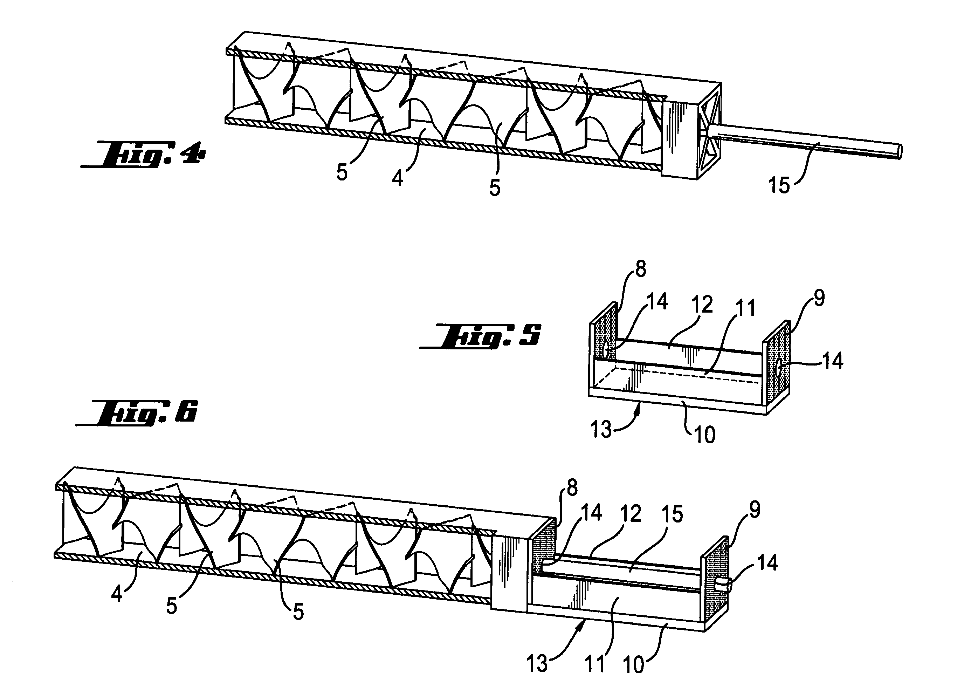

Die Figur 3 zeigt eine schematische Darstellung des Mantelrohrs 1 dieser Ausführungsform des statischen Mischers mit der Eintrittsöffnung 2 und dem dort vorliegenden Gewinde 17 sowie der Austrittsöffnung 3.

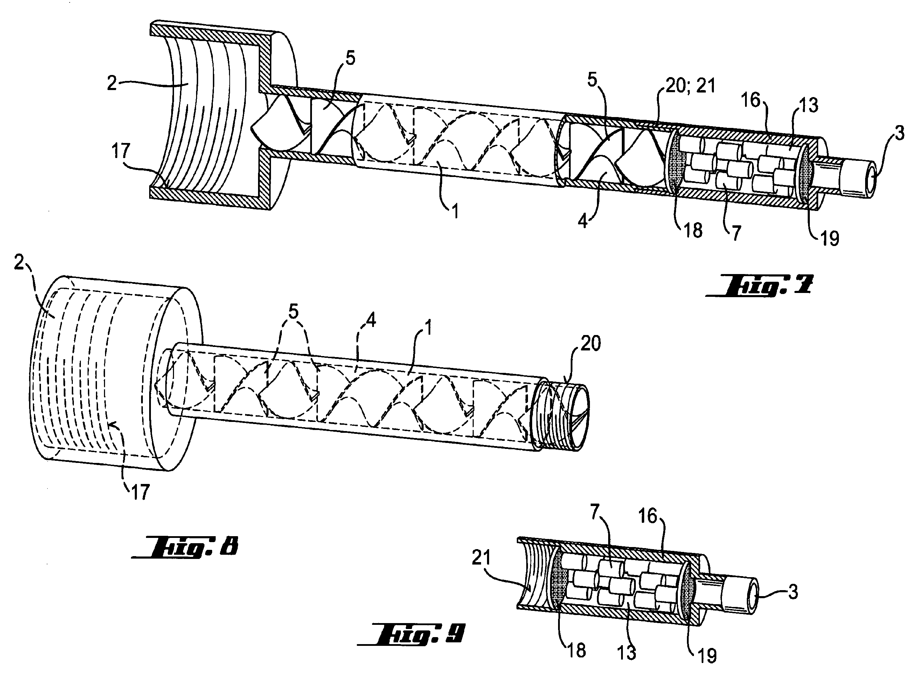

In der Figur 4 ist das aus dem Mantelrohr 1 herausgenommene Mischelement 5 wiedergegeben, wobei die Ausformung des an sich bekannten Mischelements derjenigen eines an sich bekannten Kenics-Mischers entspricht. Das Mischelement 5 weist an einem Ende den Zentrierdorn 15 auf, zum Zentrieren des in der Figur 5 dargestellten Behälters 13 zur Aufnahme der in das Mischgut einzubringenden, nicht dargestellten Zusatzstoffe 7. Dieser Behälter 13 ist aus den Abgrenzungen 8 und 9 gebildet, die für das Mischgut durchlässig sind, jedoch die in das Mischgut einzubringenden aber noch nicht gelösten oder dispergierten Zusatzstoffe 7 zurückhält. Gemäß dieser bevorzugten Ausführungsform sind die Abgrenzungen 8 und 9 an einem an die Innenabmessungen der Kammer 6 angepaßten Längsträger 10 befestigt. Weiterhin weist dieser Längsträger 10 Seitenwangen 11 und 12 auf und bildet in dieser Weise einen nach oben offenen Behälter 13 zur Aufnahme der in das Mischgut einzubringenden Zusatzstoffe 7. Bei dieser bevorzugten Ausführungsform weisen die Abgrenzungen 8 und 9 Öffnungen 14 auf, die es ermöglichen, den Behälter über den Zentrierdorn 15 auf das Mischelement 5 aufzuschieben. Dabei ist der Innendurchmesser der Öffnungen 14 derart an den Außendurchmesser des Zentrierdorns 15 angepaßt, daß ein Hindurchdringen des Mischgutes zwischen der Innenkante der Öffnungen 14 und dem Außenumfang des Zentrierdornes 15 weitgehend verhindert wird.

Bei der bestimmungsgemäßen Benutzung dieses statischen Mischers wird beispielsweise der in der Figur 5 dargestellte Behälter 13 mit den in das Mischgut einzubringenden Zusatzstoffen 7 beschickt, auf den Zentrierdorn 15 aufgeschoben und die in der Figur 6 dargestellte Kombination aus dem Mischteil 5 und dem Behälter 13 in das in der Figur 3 dargestellte Mantelrohr 1 eingeführt. Die in dieser Weise gebildete Kombination wird dann über das Gewinde 17 an der Austrittsöffnung eines die Komponenten der flüssigen reaktiven Mehrkomponenten-Zusammensetzungen in getrennten Vorratsbehältern enthaltenden Auspreßgeräts aufgeschraubt und in der Weise befestigt, daß ein Austreten des Mischgutes an der Verbindungsstelle verhindert wird.

Bei der in den Figuren 7 bis 9 dargestellten weiteren Ausführungsform der Erfindung umfaßt der statische Mischer ein zylindrisch geformtes Mantelrohr 1 mit kreisförmigem Querschnitt, welches an seiner Eintrittsöffnung 2 mit einem Gewinde 17 versehen ist, zur Befestigung des Mantelrohrs an einer Auspreßeinrichtung, wie sie oben bereits angesprochen worden ist. In dem Mischabschnitt 4 befindet sich das Mischelement 5, welches gestrichelt wiedergegeben ist. Bei dieser Ausführungsform liegt die Kammer 6 in Form eines lösbar mit dem benachbarten Mantelrohr 1 und der Austrittsöffnung 3 verbundenen Mantelrohrstücks 16 vor. Wie in der Figur 7 dargestellt ist, sind die Zusatzstoffe 7 in diesem Mantelrohrstück 16 angeordnet.

Vorzugsweise ist das Mantelrohrstück 16 in seinem Innen-Querschnitt und seinem Querschnittsflächenverlauf an den kreisförmigen, ovalen und/oder eckigen, vorzugsweise kreisförmigen und/oder quadratischen Innen-Querschnitt und den Querschnittsverlauf des Mantelrohrs 1 angepaßt. Bei der in den Figuren 7 bis 9 dargestellten Ausführungsform ist das Mantelrohrstück 16 ebenfalls zylindrisch und weist einen kreisförmigen Querschnitt auf, der demjenigen des Mantelrohrs 1 entspricht.

Gemäß einer weiteren bevorzugten Ausführungsform ist das Mantelrohrstück 16 fest mit der Austrittsöffnung 3 und lösbar mit dem Mantelrohr 1 verbunden, insbesondere über die Gewindeverbindung 20, 21 an dem Mantelrohr 1 beziehungsweise dem Mantelrohrstück 16. Einer weiteren bevorzugten Ausführungsform der Erfindung zufolge sind Mantelrohrstück 16 und Austrittsöffnung 3 einstückig ausgebildet, vorzugsweise in Form eines Kunststofformteils, welches beispielsweise durch Spritzguß hergestellt worden ist und über das Gewinde 21 mit dem Mantelrohr 1 verbunden werden kann.

Vorzugsweise sind zwischen dem Mantelrohrstück 16 und dem Mantelrohr 1 beziehungsweise vor der Austrittsöffnung 3 herausnehmbare Abgrenzungen 18, 19 vorgesehen, vorzugsweise in Form von Sieben, Lochplatten und/oder Sinterplatten aus Papier, Metall, Kunststoff und/oder Glas oder in Form eines Vlies- oder Filtermaterials, beispielsweise eines Filterbeutels.

Gemäß einer weiteren bevorzugten Ausführungsform der Erfindung sind das mindestens eine Mischelement 5, der Behälter 13 und die Abgrenzungen 8, 9, 18, 19 gegen ein Verdrehen und Verschieben in Förderrichtung gesichert, beispielsweise durch die Ausgestaltung des Innenquerschnitts des Mantelrohrs, beziehungsweise des Außenquerschnitts der Mischelemente 5, der Abgrenzungen 8, 9, 18, 19 und des Behälters 13, durch Nuten in der Innenoberfläche des Mantelrohrs und entsprechende Nasen der Mischelemente 5, der Abgrenzungen 8, 9, 18, 19 beziehungsweise des Behälters 13.

Erfindungsgemäß weisen die Abgrenzungen 8, 9, 18, 19 derart bemessene Öffnungen auf, daß das Mischgut hindurchdringen kann, jedoch die in das Mischgut einzubringenden aber noch nicht gelösten oder dispergierten Zusatzstoffe zurückgehalten werden. Vorzugsweise besitzen diese Öffnungen, die in Form von Löchern, Sieböffnungen, Sinteröffnungen, Poren oder dergleichen, Abmessungen, die einem Durchmesser von 0,2 mm bis 2,0 mm, vorzugsweise 1 mm bis 1,5 mm entsprechen.

Gemäß einer weiteren bevorzugten Ausführungsform ist in der mindestens einen Kammer 6 oder dem Mantelrohrstück 16 mindestens ein Mischelement 5 angeordnet, welches auf mindestens einer seiner Oberflächen die in das Mischgut einzubringenden Zusatzstoffe 7 trägt, beziehungsweise aus diesen Zusatzstoffen 7 ausgebildet ist. Beispielsweise ist es möglich, dieses Mischelement aus einem katalytisch wirksamen Material auszubilden oder damit zu beschichten, welches die Reaktion des aus den flüssigen, reaktiven Komponenen der Mehrkomponenten-Zusammensetzungen gebildeten reagierenden Mischguts katalysiert und beschleunigt. In dieser Weise wird erreicht, daß das Mischgut zwar bei der Hindurchführung durch den statischen Mischer eine für den Transport ausreichend niedrige Viskosität aufweist, jedoch beim Austreten aus der Austrittsöffnung 3 eine Viskosität besitzt, die ein Herabfließen des Materials nach dem Aufbringen auf Decken oder Wände verhindert.

Vorzugsweise sind die Mischelemente 5 derart geformt, daß sie das Vermischen der Bestandteile des Mischguts unter Nutzung der Strömungsenergie der unter Druck in den statischen Mischer eingebrachten Komponenten der flüssigen, reaktiven Mehrkomponenten-Zusammensetzung bewirken.

Mit Vorteil sind die Mischelemente 5 gegen ein Verdrehen in dem Mantelrohr 1 gesichert, beispielsweise durch Nuten in der Innenwandung des Mantelrohrs und entsprechende Nasen auf der Außenseite der Mischelemente 5.

Weiterhin sind die Außenabmessungen der Mischelemente 5 und der Abgrenzungen 8, 9, 18, 19 derart an die Innenabmessungen des Mantelrohrs 1 beziehungsweise des Mantelrohrstücks 16 angepaßt, daß ein Vorbeiströmen des Mischguts zwischen der Innenwand des Mantelrohrs 1 und dem Außenumfang der Mischelemente 5 und der Abgrenzungen 8, 9, 18, 19 verhindert wird, um in diese Weise zu bewirken, daß das Mischgut stets mit einem guten Kontakt zu den in das Mischgut einzubringenden Zusatzstoffen durch den statischen Mischer geführt wird.

Wenngleich die lösbare Verbindung des Mantelrohrstücks 16 mit dem Mantelrohr 1, wie in den Figuren 7 bis 9 dargestellt, als Schraubverbindung dargestellt ist, ist es natürlich möglich, eine Steckverbindung, Klemmverbindung und/oder Bayonettverbindung vorzusehen. Vorzugsweise kann an der Verbindungsstelle eine geeignete Dichtung vorgesehen werden, die das Austreten des Mischguts an der Verbindungsstelle verhindert.

Bei dem erfindungsgemäßen statischen Mischer können das Mantelrohr 1, das Mantelrohrstück 16, die Mischelemente 5, die Bestandteile des Behälters 13 und die Abgrenzungen 8, 9, 18, 19 aus Glas, Kunststoff und/oder Metall gefertigt sein.

Das Mantelrohr des erfindungsgemäßen statischen Mischers kann anstelle des in den Figuren 2, 3, 7 und 8 dargestellten Gewindes 17 auch eine das Austreten des Mischguts an der Verbindungsstelle verhindernde Steckverbindung, Schraubverbindung, Klemmverbindung und/oder Bayonettverbindung aufweisen, vorzugsweise jedoch ein Gewinde, mit dem das Mantelrohr an der Austrittsöffnung eines die Komponenten der flüssigen, reaktiven Mehrkomponenten-Zusammensetzung in getrennten Vorratsbehältern enthaltenden Auspreßgeräts befestigt werden kann. Dies erfolgt nach dem Anordnen der in das Mischgut einzubringenden Zusatzstoffe 7 in die Kammer 6. Dabei erfolgt die Auswahl von Art und Menge dieser Zusatzstoffe in Abhängigkeit von der ablaufenden Reaktion zwischen den flüssigen, reaktiven Komponenten der Mehrkomponenten-Zusammensetzung beziehungsweise des daraus in dem statischen Mischer gebildeten Mischguts und den angestrebten Eigenschaften des aus der Austrittsöffnung 3 des statischen Mischers austretenden Mischgutes.

Ein weiterer Gegenstand der Erfindung betrifft die Verwendung des oben beschriebenen statischen Mischers zur Einführung von Zusatzstoffen in das Mischgut, welche dazu geeignet sind, die physikalischen und/oder chemischen Eigenschaften des aus der flüssigen, reaktiven Mehrkomponenten-Zusammensetzung gebildeten flüssigen Mischguts zu modifizieren. Vorzugsweise verwendet man Zusatzstoffe, welche die Viskosität des Mischguts erhöhen. In besonders vorteilhafter Weise verwendet man den erfindungsgemäßen statischen Mischer zur Erhöhung der Viskosität eines in dem mindestens einen Mischabschnitt 4 erzeugten, noch nicht ausreagierten, flüssigen Brandschutzschaum.

Weiterhin ist es möglich, den erfindungsgemäßen statischen Mischer dazu zu verwenden, die Geschwindigkeit der Polyurethanbildung und des Aufschäumvorgangs eines aus der flüssigen, reaktiven Mehrkomponenten-Zusammensetzung gebildeten flüssigen Polyurethanschaumstoff-Systems erhöhende Zusatzstoffe in das Mischgut einzubringen und damit homogen zu vermischen.

## Patentansprüche

1. Statischer Mischer zum Vermischen der Komponenten von flüssigen, reaktiven Mehrkomponenten-Zusammensetzungen, mit einem mindestens einen Mischabschnitt definierenden Mantelrohr (1), mit Eintrittsöffnung (2) und Austrittsöffnung (3) für das Mischgut, und mindestens einem in dem Mischabschnitt (4) angeordneten, in seinen Außenabmessungen an die Innenabmessungen des Mantelrohrs (1) angepaßten Mischelement (5), **gekennzeichnet durch** mindestens eine zwischen der Eintrittsöffnung (2) und der Austrittsöffnung (3) in dem Mantelrohr (1) vorgesehene Kammer (6) zur Aufnahme von in das Mischgut einzubringenden Zusatzstoffen (7).

2. Statischer Mischer nach Anspruch 1, **dadurch gekennzeichnet, daß** die Kammer (6) in Förderrichtung vor oder nach dem Mischabschnitt (4) oder zwischen zwei Mischabschnitten (4) angeordnet ist.

3. Statischer Mischer nach Anspruch 1 oder 2, **dadurch gekennzeichnet, daß** das Mantelrohr (1) einen kreisförmigen, ovalen und/oder eckigen, vorzugsweise kreisförmigen und/oder quadratischen Innen-Querschnitt aufweist.

4. Statischer Mischer nach Anspruch 3, **dadurch gekennzeichnet, daß** der durch das Mantelrohr (1) definierte Innenraum zylindrisch geformt ist oder seine Querschnittsfläche von der Eintrittsöffnung (2) zur Austrittsöffnung (3) abnimmt.

5. Statischer Mischer nach mindestens einem der Ansprüche 1 bis 4, **dadurch gekennzeichnet, daß** die mindestens eine Kammer (6) an ihrem Einlaufende bzw. Auslaufende durch mindestens eine in ihren Außenabmessungen an die Innenabmessungen des Mantelrohrs (1) angepaßte Abgrenzung (8 bzw. 9) begrenzt wird, die für das Mischgut durchlässig ist, jedoch die in das Mischgut einzubringenden nicht gelösten oder nicht dispergierten Zusatzstoffe (7) zurückhält.

6. Statischer Mischer nach Anspruch 5, **dadurch gekennzeichnet, daß** die mindestens eine Kammer (6) durch zwei Abgrenzungen (8 bzw. 9) begrenzt wird.

7. Statischer Mischer nach Anspruch 5 oder 6, **dadurch gekennzeichnet, daß** die mindestens eine Abgrenzung (8 bzw. 9) in Form eines Siebes, einer Lochplatte, einer Sinterplatte, eines Vliesmaterials und/oder eines Filterbeutels vorliegt.

8. Statischer Mischer nach den Ansprüchen 5 bis 7, **dadurch gekennzeichnet, daß** die mindestens eine Abgrenzung (8 bzw. 9) der mindestens einer Kammer (6) an einem an die Innenabmessungen der Kammer (6) angepaßten Längsträger (10) befestigt ist.

9. Statischer Mischer nach Anspruch 8, **dadurch gekennzeichnet, daß** der Längsträger (10) Seitenwangen (11, 12) aufweist, die einen Behälter (13) zur Aufnahme der in das Mischgut einzubringenden Zusatzstoffe (7) definieren.

10. Statischer Mischer nach mindestens einem der Ansprüche 5 bis 9, **dadurch gekennzeichnet, daß** die mindestens eine Abgrenzung (8 bzw. 9) der mindestens einen Kammer (6) Öffnungen (14) zur Aufnahme eines am Ende des Mischabschnitts (4) befestigten Zentrierdorns (15) aufweist.

11. Statischer Mischer nach Anspruch 10, **dadurch gekennzeichnet, daß** der Zentrierdorn (15) an dem benachbarten Mischelement (5) befestigt ist.

12. Statischer Mischer nach mindestens einem der vorhergehenden Ansprüche, **dadurch gekennzeichnet, daß** die Kammer (6) durch ein lösbar mit dem benachbarten Mantelrohr (1) und der Austrittsöffnung (3) verbundenes Mantelrohrstück (16) gebildet wird.

13. Statischer Mischer nach Anspruch 12, **dadurch gekennzeichnet, daß** das Mantelrohrstück (16) in seinem Innen-Querschnitt und seinem Querschnittsflächenverlauf an den kreisförmigen, ovalen und/oder eckigen, vorzugsweise kreisförmigen und/oder quadratischen Innen-Querschnitt und den Querschnittsflächenverlauf des Mantelrohrs (1) angepaßt ist.

14. Statischer Mischer nach den Ansprüchen 12 und 13, **dadurch gekennzeichnet, daß** das Mantelrohrstück (16) fest mit der Austrittsöffnung (3) und lösbar mit dem Mantelrohr (1) verbunden ist.

15. Statischer Mischer nach mindestens einem der 12 bis 14, **dadurch gekennzeichnet, daß** das Mantelrohrstück (16) und die Austrittsöffnung (3) einstückig ausgebildet sind.

16. Statischer Mischer nach mindestens einem der Ansprüche 12 bis 15, **dadurch gekennzeichnet, daß** zwischen dem Mantelrohrstück (16) und dem Mantelrohr (1) bzw. vor der Austrittsöffnung (3) herausnehmbare Abgrenzungen (18 bzw. 19) vorgesehen sind.

17. Statischer Mischer nach Anspruch 16, **dadurch gekennzeichnet, daß** die herausnehmbaren Abgrenzungen (18, 19) in Form von Sieben, Lochplatten, Sinterplatten, Vliesmaterialien und/oder Filterbeuteln vorliegt.

18. Statischer Mischer nach Anspruch 17, **dadurch gekennzeichnet, daß** die herausnehmbaren Abgrenzungen (18, 19) gegen ein Verschieben in Förderrichtung gesichert sind.

19. Statischer Mischer nach mindestens einem der vorhergehenden Ansprüche, **dadurch gekennzeichnet, daß** die Abgrenzungen (8, 9, 18, 19) derart bemessene Öffnungen aufweisen, daß das Mischgut hindurchdringen kann, die in das Mischgut einzubringenden, nicht gelösten oder nicht dispergierten Zusatzstoffe jedoch zurückgehalten werden.

20. Statischer Mischer nach Anspruch 19, **dadurch gekennzeichnet, daß** die Öffnungen der Abgrenzungen (8, 9, 18, 19) einen Durchmesser von 0.2 bis 2 mm, vorzugsweise 1 bis 1,5 mm aufweisen.

21. Statischer Mischer nach mindestens einem der vorhergehenden Ansprüche, **dadurch gekennzeichnet, daß** in der mindestens einen Kammer (6) oder dem Mantelrohrstück (16) mindestens ein Mischelement (5) angeordnet ist, welches auf seinen Oberflächen die in das Mischgut einzubringenden Zusatzstoffe (7) trägt bzw. daraus besteht.

22. Statischer Mischer nach mindestens einem der vorhergehenden Ansprüche, **dadurch gekennzeichnet, daß** die Innenoberfläche der mindestens einen Kammer (6) und/oder des Mantelrohrstücks (16) die in das Mischgut einzubringenden Zusatzstoffe (7) trägt bzw. daraus besteht.

23. Statischer Mischer nach mindestens einem der vorhergehenden Ansprüche, **dadurch gekennzeichnet, daß** die Mischelemente (5) derart geformt sind, daß sie das Vermischen der Bestandteile des Mischguts unter Nutzung der Strömungsenergie der unter Druck in den statischen Mischer eingebrachten Komponenten der flüssigen, reaktiven Mehrkomponenten-Zusammensetzungen bewirken.

24. Statischer Mischer nach mindestens einem der vorhergehenden Ansprüche, **dadurch gekennzeichnet, daß** die Mischelemente (5) gegen ein Verdrehen in dem Mantelrohr (1) gesichert sind.

25. Statischer Mischer nach mindestens einem der vorhergehenden Ansprüche, **dadurch gekennzeichnet, daß** die Außenabmessungen der Mischelemente (5) und der Abgrenzungen (8, 9, 18, 19) derart an die Innenabmessungen des Mantelrohrs (1) bzw. des Mantelrohrstücks (16) angepaßt sind, daß ein Vorbeiströmen des Mischguts zwischen der Innenwand des Mantelrohrs (1) und dem Außenumfang der Mischelemente (5) und der Abgrenzungen (8, 9, 18, 19) verhindert wird.

26. Statischer Mischer nach mindestens einem der vorhergehenden Ansprüche, **dadurch gekennzeichnet, daß** zur lösbaren Verbindung des Mantelrohrstücks (16) mit dem dem Mantelrohr (1) und der Austrittsöffnung (3) eine das Austreten des Mischguts an der Verbindungsstelle verhindernde Steckverbindung, Schraubverbindung, Klemmverbindung und/oder Bajonettverbindung vorgesehen ist.

27. Statischer Mischer nach Anspruch 26, **dadurch gekennzeichnet, daß** die lösbare Verbindung des Mantelrohrstücks (16) mit dem Mantelrohr (1) und der Austrittsöffnung (3) über eine Schraubverbindung (20, 21) erfolgt.

28. Statischer Mischer nach mindestens einem der vorhergehenden Ansprüche, **dadurch gekennzeichnet, daß** das Mantelrohr (1), das Mantelrohrstück (16), die Mischelemente (5), die Bestandteile des Behälters (13) und die Abgrenzungen (8, 9, 18, 19) aus Glas, Kunststoff und/oder Metall gefertigt sind.

29. Statischer Mischer nach mindestens einem der vorhergehenden Ansprüche, **dadurch gekennzeichnet, daß** an der Eintrittsöffnung (2) des Mantelrohrs (1) eine Steckverbindung, Schraubverbindung, Klemmverbindung und/oder Bajonettverbindung, vorzugsweise ein Gewinde (17) vorgesehen ist, zur lösbaren Befestigung an der Austrittsöffnung eines die Komponenten der flüssigen reaktiven Mehrkomponenten-Zusammensetzung in getrennten Vorratsbehältern enthaltenden Auspreßgerätes.

30. Verwendung des statischem Mischers nach mindestens einem der vorhergehenden Ansprüche zur Einführung von die physikalischen und/oder chemischen Eigenschaften des aus der flüssigen, reaktiven Mehrkomponenten-Zusammensetzung gebildeten flüssigen Mischguts beeinflussenden Zusatzstoffen in das Mischgut.

31. Verwendung nach Anspruch 30 zum Einarbeiten von die Viskosität des aus der flüssigen, reaktiven Mehrkomponenten-Zusammensetzung gebildeten flüssigen Mischguts erhöhenden Zusatzstoffen.

32. Verwendung nach Anspruch 31 zur Erhöhung der Viskosität eines in dem mindestens einen Mischabschnitt (4) erzeugten, noch nicht ausreagierten, flüssigen Brandschutzschaums.

33. Verwendung nach Anspruch 30 zum Einarbeiten von die Geschwindigkeit der Polyurethanbildung und des Aufschäumvorgangs eines aus der flüssigen, reaktiven Mehrkomponenten-Zusammensetzung gebildeten flüssigen Polyurethanschaumstoffsystems erhöhenden Zusatzstoffen in das Polyurethanschaumstoffsystem.

## Claims

1. Static mixer for mixing components of liquid reactive multi-component compositions, comprising at least one casing pipe (1) which defines a mixing section, with inlet opening (2) and outlet opening (3) for the mixed material, and at least one mixing element (5) arranged in the mixing section (4) and matched in its external dimensions to the internal dimensions of the casing pipe (1), **characterised by** at least one chamber (6) provided between the inlet opening (2) and the outlet opening (3) in the casing pipe (1) for accommodation of supplementary materials (7) to be added to the mixing components.

2. Static mixer according to Claim 1, **characterised in that** the chamber (6) is arranged, as seen in the conveying direction, in front of or behind the mixing section (4) or between two mixing sections (4).

3. Static mixer according to Claim 1 or 2, **characterised in that** the inside cross-section of the casing pipe (1) is circular, oval and/or cornered, preferably circular and/or square.

4. Static mixer according to Claim 3, **characterised in that** the inner area as defined by the casing pipe (1) is cylindrical in shape or its cross-sectional surface reduces from the inlet opening (2) to the outlet opening (3).

5. Static mixer according to at least one of Claims 1 to 4, **characterised in that** the at least one chamber (6) is at its inlet end or outlet end defined by at least one definition (8 or 9) which is in its external dimensions matched to the inside dimensions of the casing pipe (1) and which allows mixing material to pass through, however, it holds back non-dissolved or non-dispersed supplementary materials (7) which are to be added to the mixing material.

6. Static mixer according to Claim 5, **characterised in that** the at least one chamber (5) is defined by two definitions (8 or 9).

7. Static mixer according to Claim 5 or 6,**characterised in that** the at least one definition (8 or 9) is offered in the form of a sieve, a perforated plate, a sintered plate, a fleece material and/or a filter bag.

8. Static mixer according to Claims 5 to 7, **characterised in that** the at least one definition (8 or 9) of the at least one chamber (6) is mounted on a longitudinal support (10) which is matched to the inside dimensions of the chamber (6).

9. Static mixer according to Claim 8, **characterised in that** the longitudinal support (1) has lateral cheeks (11, 12) which define a container (13) for accommodating supplementary materials (7) which are to be added to the mixing material.

10. Static mixer according to at least one of Claims 5 to 9, **characterised in that** the at least one definition (8 or 9) of the at least one chamber (6) has openings (14) for accommodating a centring pin (15) which is mounted at the end of the mixing section (4).

11. Static mixer according to Claim 10, **characterised in that** the centring pin (15) is mounted on a neighbouring mixing element (5).

12. Static mixer according to at least one of the above claims, **characterised in that** the chamber (5) is formed by a casing pipe piece (16) which is detachably connected to a neighbouring casing pipe (1) and the outlet opening (3).

13. Static mixer according to Claim 12, **characterised in that** the casing pipe piece (16) is in its inside cross-section and its cross-sectional surface orientation matched to the circular, oval and/or cornered, preferably circular and/or square inside cross-section and its cross-sectional surface orientation of the casing pipe (1).

14. Static mixer according to Claims 12 and 13, **characterised in that** the casing pipe piece (16) is firmly connected to the outlet opening (3) and detachably to the casing pipe (1).

15. Static mixer according to at least one of Claims 12 to 14, **characterised in that** the casing pipe piece (16) and the outlet opening (3) are made in one piece.

16. Static mixer according to at least one of Claims 12 to 15, **characterised in that** between the casing pipe piece (16) and the casing pipe (1) or ahead of the outlet opening (3) are provided three extractable definitions (18 or 19).

17. Static mixer according to Claim 16, **characterised in that** the extractable definitions (18, 19) are offered in the form of sieves, perforated plates, sintered plates, fleece materials and/or filter bags.

18. Static mixer according to Claim 17, **characterised in that** the extractable definitions (18, 19) are secured against displacement in the conveying direction.

19. Static mixer according to at least one of the above claims, **characterised in that** the definitions (8, 9, 18, 19) have openings of such dimension that the mixing material can penetrate through it whilst holding back non-dissolved or non-dispersed supplementary materials which are to be added into the mixing material.

20. Static mixer according to Claim 19, **characterised in that** the openings of the definitions (8, 9, 18, 19) have a diameter of between 0.2 and 2 mm, preferably between 1 and 1.5 mm.

21. Static mixer according to at least one of the above claims, **characterised in that** in the at least one chamber (6) or in the casing pipe piece (16) is arranged at least one mixing element (5) which is made of, or carries on its surfaces the supplementary materials (7) which are to be added to the mixing material.

22. Static mixer according to at least one of the above claims, **characterised in that** the inner surface of the at least one chamber (6) and/or the casing pipe piece (16) is made of, or carries the supplementary materials (7) which are to be added to the missing material.

23. Static mixer according to at least one of the above claims, **characterised in that** the mixing elements (5) are formed in such a manner that they cause mixing of components of the mixing material whilst utilising the flow energy of components of liquid reactive multi-component compositions which have been entered into the static mixer under pressure.

24. Static mixer according to at least one of the above claims, **characterised in that** the mixing elements (5) are secured against rotation in the casing pipe (1).

25. Static mixer according to at least one of the above claims, **characterised in that** the outside dimensions of the mixing elements (5) and the definitions (8, 9, 18, 19) are matched to the inside dimensions of the casing pipe (1) or the casing pipe piece (16) in such a manner that mixing material is prevented from flowing between the inside wall of the casing pipe (1) and the outside periphery of the mixing elements (5) and their definitions (8, 9, 18, 19).

26. Static mixer according to at least one of the above claims, **characterised in that** for the purpose of detachable connection of the casing pipe piece (16) to the casing pipe (1) and the outlet opening (3) is provided a plug connection, screw connection, clamping connection and/or bayonet connection which prevent discharge of mixing material at the connection point.

27. Static mixer according to Claim 26, **characterised in that** the detachable connection of the casing pipe piece (16) to the casing pipe (1) and the outlet opening (3) is carried out via a screw connection (20, 21).

28. Static mixer according to at least one of the above claims, **characterised in that** the casing pipe (1), the casing pipe piece (16), the mixing elements (5), the components of the container (13) and the definitions (8, 9, 18, 19) are made of glass, plastic and/or metal.

29. Static mixer according to at least one of the above claims, **characterised in that** at the inlet opening (2) of the casing pipe (1) is provided a plug connection, screw connection, clamping connection and/or bayonet connections, preferably a thread (17) for detachable mounting on the outlet opening of one of the squeezing devices which contains the liquid reactive multi-component composition in separate storage containers.

30. Use of the static mixers according to at least one of the above claims for introducing into the mixing material supplementary materials which affect the physical and/or chemical properties of a liquid mixing material produced from the liquid, reactive multi-component composition.

31. Use according to Claim 30 for working-in supplementary materials which increase the viscosity of the liquid mixing material produced from the liquid reactive multi-component composition.

32. Use according to Claim 31 for increasing the viscosity of a liquid fire-protection foam which has been produced in the at least one mixing section (4) but which has not yet been cured.

33. Use according to Claim 30 for working into the polyurethane foam material system complementary substances which increase the speed of polyurethane development and the foaming process of a polyurethane foam material system which has been formed from the liquid reactive multi-component composition.

## Revendications

1. Mélangeur statique pour mélanger des composants de composés fluides réactifs à plusieurs composants, avec un tube enveloppe (1) définissant au moins une portion de mélange, avec une ouverture d'entrée (2) et une ouverture de sortie (3) pour le produit mélangé, et avec au moins un élément mélangeur (5) qui est disposé dans la portion de mélange (4) et dont les dimensions extérieures sont adaptées aux dimensions intérieures du tube enveloppe (1), **caractérisé par** au moins une chambre (6) qui est située dans le tube enveloppe (1) entre l'ouverture d'entrée (2) et l'ouverture de sortie (3) et qui sert à recevoir des adjuvants (7) à incorporer au produit mélangé.

2. Mélangeur statique selon la revendication 1, **caractérisé en ce que** la chambre (6) est disposée avant ou après la portion de mélange (4) par rapport à la direction d'alimentation ou entre deux portions de mélange (4).

3. Mélangeur statique selon la revendication 1 ou 2, **caractérisé en ce que** le-tube enveloppe (1) possède une section transversale intérieure circulaire, ovale et/ou polygonale, de préférence circulaire et/ou carrée.

4. Mélangeur statique selon la revendication 3, **caractérisé en ce que** l'espace intérieur défini par le tube enveloppe (1) est de forme cylindrique ou sa surface de section transversale diminue de l'ouverture d'entrée (2) vers l'ouverture de sortie (3).

5. Mélangeur statique selon au moins une des revendications 1 à 4, **caractérisé en ce que** la chambre au nombre d'au moins une (6) est limitée à son extrémité d'admission, respectivement à son extrémité d'évacuation par au moins un moyen de délimitation (8, respectivement 9) dont les dimensions extérieures sont adaptées aux dimensions intérieures du tube enveloppe (1) et qui est perméable au produit mélangé, mais qui retient les adjuvants (7) non dissous ou non dispersés à incorporer au produit mélangé.

6. Mélangeur statique selon la revendication 5, **caractérisé en ce que** la chambre au nombre d'au moins une (6) est limitée par deux moyens de délimitation (8, respectivement 9).

7. Mélangeur statique selon la revendication 5 ou 6, **caractérisé en ce que** le moyen de délimitation au nombre d'au moins un (8, respectivement 9) se présente sous la forme d'un tamis, d'une plaque perforée, d'une plaque frittée, d'une matière non tissée et/ou d'une poche filtrante.

8. Mélangeur statique selon les revendications 5 à 7, **caractérisé en ce que** le moyen de délimitation au nombre d'au moins un (8, respectivement 9) de la chambre au nombre d'au moins une (6) est fixé à un longeron (10) adapté aux dimensions intérieures de la chambre (6).

9. Mélangeur statique selon la revendication 8, **caractérisé en ce que** le longeron (10) comporte des parois latérales (11, 12) qui définissent un récipient (13) pour recevoir les adjuvants (7) à incorporer au produit mélangé.

10. Mélangeur statique selon au moins une des revendications 5 à 9, **caractérisé en ce que** le moyen de délimitation au nombre d'au moins un (8, respectivement 9) de la chambre au nombre d'au moins une (6) est pourvu d'ouvertures (14) pour recevoir une broche de centrage (15) fixée à l'extrémité de la portion de mélange (4).

11. Mélangeur statique selon la revendication 10, **caractérisé en ce que** la broche de centrage (15) est fixée à l'élément mélangeur voisin (5).

12. Mélangeur statique selon au moins une des revendications précédentes, **caractérisé en ce que** la chambre (6) est formée par un tronçon de tube enveloppe (16) relié de manière détachable au tube enveloppe voisin (1) et à l'ouverture de sortie (3).

13. Mélangeur statique selon la revendication 12, **caractérisé en ce que** la section transversale intérieure et le profil de la surface de section transversale du tronçon de tube enveloppe (16) sont adaptés à la section transversale intérieure circulaire, ovale et/ou polygonale, de préférence circulaire et/ou carrée, et au profil de la surface de section transversale du tube enveloppe (1).

14. Mélangeur statique selon les revendications 12 et 13, **caractérisé en ce que** le tronçon de tube enveloppe (16) est fixé de manière solidaire à l'ouverture de sortie (3) et de manière détachable au tube enveloppe (1).

15. Mélangeur statique selon au moins une des revendications 12 à 14, **caractérisé en ce que** le tronçon de tube enveloppe (16) et l'ouverture de sortie (3) sont réalisés d'un seul tenant.

16. Mélangeur statique selon au moins une des revendications 12 à 15, **caractérisé en ce que**, entre le tronçon de tube enveloppe (16) et le tube enveloppe (1), respectivement avant l'ouverture de sortie (3), sont prévus des moyens de délimitation amovibles (18, respectivement 19).

17. Mélangeur statique selon la revendication 16, **caractérisé en ce que** les moyens de délimitation amovibles (18, 19) se présentent sous la forme de tamis, de plaques perforées, de plaques frittées, de matières non tissées et/ou de poches filtrantes.

18. Mélangeur statique selon la revendication 17, **caractérisé en ce que** les moyens de délimitation amovibles (18, 19) sont immobilisés en translation dans la direction d'alimentation.

19. Mélangeur statique selon au moins une des revendications précédentes, **caractérisé en ce que** les moyens de délimitation (8, 9, 18, 19) sont pourvus d'ouvertures dimensionnées de façon à laisser passer le produit mélangé, mais à retenir les adjuvants non dissous ou non dispersés à incorporer dans le produit mélangé.

20. Mélangeur statique selon la revendication 19, **caractérisé en ce que** les ouvertures des moyens de délimitation (8, 9, 18, 19) possèdent un diamètre de 0,2 à 2 mm, de préférence de 1 à 1,5 mm.

21. Mélangeur statique selon au moins une des revendications précédentes, **caractérisé en ce que** dans la chambre au nombre d'au moins une (6) ou dans le tronçon de tube enveloppe (16) est disposé au moins un élément mélangeur (5) qui porte, sur ses surfaces, les adjuvants (7) à incorporer dans le produit mélangé, respectivement qui en est constitué.

22. Mélangeur statique selon au moins une des revendications précédentes, **caractérisé en ce que** la surface intérieure de la chambre au nombre d'au moins une (6) et/ou du tronçon de tube enveloppe (16) porte les adjuvants (7) à incorporer dans le produit mélangé, respectivement en est constituée.

23. Mélangeur statique selon au moins une des revendications précédentes, **caractérisé en ce que** les éléments mélangeurs (5) sont conformés de façon à réaliser le mélange des éléments constitutifs du produit mélangé en utilisant l'énergie d'écoulement des composants, introduits sous pression dans le mélangeur statique, des composés fluides réactifs à plusieurs composants.

24. Mélangeur statique selon au moins une des revendications précédentes, **caractérisé en ce que** les éléments mélangeurs (5) sont immobilisés en rotation dans le tube enveloppe (1).

25. Mélangeur statique selon au moins une des revendications précédentes, **caractérisé en ce que** les dimensions extérieures des éléments mélangeurs (5) et des moyens de délimitation (8, 9, 18, 19) sont adaptées aux dimensions intérieures du tube enveloppe (1), respectivement du tronçon de tube enveloppe (16), de façon à empêcher le produit mélangé de passer entre la paroi intérieure du tube enveloppe (1) et la périphérie extérieure des éléments mélangeurs (5) et celle des moyens de délimitation (8, 9, 18, 19).

26. Mélangeur statique selon au moins une des revendications précédentes, **caractérisé en ce que**, pour relier le tronçon de tube enveloppe (16) de manière détachable au tube enveloppe (1) et à l'ouverture de sortie (3), il est prévu une liaison par emboîtement, une liaison par vissage, une liaison par serrage et/ou une liaison à baïonnette qui empêche le produit mélangé de sortir au niveau de la zone de liaison.

27. Mélangeur statique selon la revendication 26, **caractérisé en ce que** la liaison détachable du tronçon de tube enveloppe (16) au tube enveloppe (1) et à l'ouverture de sortie (3) s'effectue par l'intermédiaire d'une liaison vissée (20, 21).

28. Mélangeur statique selon au moins une des revendications précédentes, **caractérisé en ce que** le tube enveloppe (1), le tronçon de tube enveloppe (16), les éléments mélangeurs (5), les éléments constitutifs du récipient (13) et les moyens de délimitation (8, 9, 18, 19) sont réalisés en verre, en matière plastique et/ou en métal.

29. Mélangeur statique selon au moins une des revendications précédentes, **caractérisé en ce qu'**au niveau de l'ouverture d'entrée (2) du tube enveloppe (1) est prévue une liaison par emboîtement, une liaison par vissage, une liaison par serrage et/ou une liaison à baïonnette, de préférence un filetage (17), pour la fixation détachable à l'ouverture de sortie d'un outil d'extrusion contenant les composants du composé fluide réactif à plusieurs composants placés dans des réservoirs séparés.

30. Utilisation du mélangeur statique selon au moins une des revendications précédentes pour introduire, dans le produit mélangé fluide formé à partir du composé fluide réactif à plusieurs composants, des adjuvants modifiant les propriétés physiques et/ou chimiques dudit produit mélangé.

31. Utilisation selon la revendication 30 pour incorporer des adjuvants augmentant la viscosité du produit mélangé fluide formé à partir du composé fluide réactif à plusieurs composants.

32. Utilisation selon la revendication 31 pour augmenter la viscosité d'une mousse antifeu fluide qui n'est pas encore entrée en réaction et qui est produite dans au moins une portion de mélange (4).

33. Utilisation selon la revendication 30 pour incorporer, dans le système de mousse polyuréthanne liquide formé à partir du composé fluide réactif à plusieurs composants, des adjuvants augmentant la vitesse de formation du polyuréthanne et celle du processus de moussage du système de mousse polyuréthanne.
